# FASCICULE DE BREVET EUROPEEN

(11) **EP 2 079 864 B1**
(45) Date de publication et mention de la délivrance du brevet: **20.07.2011**
(21) Numéro de dépôt: 07858569.2
(22) Date de dépôt: 15.10.2007
(51) Int. Cl.: D04B 21/14, D04B 21/00, E01C 11/16, B32B 7/00, E02B 3/12

(54) **GÉOTEXTILE COMPOSITE POUR LE GÉNIE CIVIL**
VERBUNDGEOTEXTIL FÜR HOCH- UND TIEFBAU
COMPOSITE GEOTEXTILE FOR CIVIL ENGINEERING

(30) Priorité: 17.10.2006 FR 0654306
(43) Date de publication de la demande: 22.07.2009
(73) Titulaire: MDB TEXINOV SA, 38110 Saint Didier de la Tour (FR)
(72) Inventeur: DUCOL, Jean-Paul, 69007 Lyon (FR); TANKERE, Jacques, 01800 Meximieux (FR)
(74) Mandataire: Vuillermoz, Bruno
(86) Numéro de dépôt international: PCT/FR2007/052142
(87) Numéro de publication internationale: WO 2008/047030

(56) Documents cités:
- EP-A- 0 897 035
- WO-A-2008/003902
- WO-A2-01/25564
- FR-A- 2 816 648
- IE-A1- 902 957
- NL-A- 8 005 538
- US-A- 5 651 641
- US-A1- 4 540 311
- US-A1- 2003 017 771
- US-A1- 2004 120 765
- US-B1- 6 429 153

## Description

### DOMAINE TECHNIQUE

La présente invention concerne un géotextile composite pour des applications de génie civil, ce géotextile comportant au moins une nappe textile tissée ou tricotée ainsi qu'au moins un élément de renfort, de type grille ou fils techniques.

Parmi les applications de génie civil susceptibles de mettre en oeuvre l'objet de la présente invention, on peut citer les armatures de renforcement de sol, de remblais et autre talus, réalisées notamment dans le cadre de chantiers autoroutiers, de construction ferroviaire, de murs de soutènement etc.

Par ailleurs, la présente invention concerne un procédé de fabrication d'un tel géotextile composite.

### ETAT ANTERIEUR DE LA TECHNIQUE

Dans le domaine du génie civil, en particulier pour les applications mentionnées ci-dessus, les géotextiles sont communément employés pour remplir des fonctions de séparation entre sols, de drainage hydraulique, de filtration, d'imperméabilisation, de renforcement et/ou de protection de terrain. La fonction de filtration consiste à réguler le débit hydraulique circulant dans les sols vers le bas, tandis que le drainage consiste à permettre la circulation d'eau à travers le sol dans un sens horizontal ou oblique. Par séparation entre sols on désigne l'isolation mutuelle de sols voisins présentant des structures différentes. Ainsi, on cherche généralement à éviter la migration de fines particules d'un sol sous-jacent dans la partie noble structurant un remblai.

Ainsi, chacune de ces fonctions peut aujourd'hui être remplie par un géotextile monocouche réalisé en un textile tissé, non tissé ou sous forme de grille. C'est pourquoi il est nécessaire d'employer plusieurs géotextiles monocouche juxtaposés pour remplir toutes les fonctions nécessaires à une application particulière de génie civil.

Cependant, il existe également des géotextiles composites, c'est-à-dire composés de plusieurs couches, aptes à remplir de multiples fonctions. De tels géotextiles composites sont plus simples et moins onéreux à installer sur leur site d'application.

En effet, contrairement au cas de la juxtaposition de plusieurs géotextiles monocouche, il n'est pas nécessaire d'assurer la cohésion entre les différentes couches et il n'y a pas de risques de glissement ou de pliage des couches les unes par rapport aux autres.

Les géotextiles composites actuellement mis en oeuvre sont réalisés à partir de nappes textiles en non tissé associées à des grilles ou à des fils de renfort mécanique. Les nappes en non tissé sont généralement épaisses de manière à présenter une résistance mécanique propre relativement élevée. On a par exemple décrit dans le document US2004/120765 un tel géotextile.

Un géotextile composite selon le préambule de la revendication 1 est connu de WO 2008/003902 A2, date de dépôt 03.07.2007, date de publication 10.01.2008.

Ces géotextiles composites sont relativement difficiles à manipuler du fait de l'encombrement qu'ils représentent. En outre, leurs coûts de stockage et de transport s'en trouvent obérés. Pourtant, ces opérations nécessitent une certaine réactivité ou fluidité, de manière à adapter l'installation des géotextiles sur site aux contraintes calendaires complexes et fluctuantes des chantiers de génie civil.

De plus, ces géotextiles composites sont relativement difficiles à « plier », c'est-à-dire à conformer à de faibles rayons de courbure du terrain d'installation, notamment en raison de leur faible tenue, elle-même due à une rigidité insuffisante de la nappe en non tissé.

En outre, les nappes textiles en non tissé ne remplissent pas les fonctions hydrauliques (drainage, filtration, imperméabilisation) de manière totalement satisfaisante dans la mesure où leur densité locale n'est pas totalement maîtrisable.

Par ailleurs, ces géotextiles composites sont généralement fabriqués en mettant en oeuvre des procédés comportant plusieurs étapes successives pour en assembler les différentes couches fonctionnelles.

La présente invention a donc pour objet, d'une part, un géotextile composite et, d'autre part, son procédé de fabrication permettant d'éviter les inconvénients de l'art antérieur mentionnés ci-dessus.

### EXPOSE DE L'INVENTION

L'invention concerne un géotextile composite apte à remplir plusieurs fonctions de génie civil pour un coût et un encombrement limités, simple à stocker, à transporter et à installer et présentant une bonne aptitude à la conformation au terrain.

L'invention se rapporte donc à un géotextile composite destiné à remplir des fonctions de génie civil comportant au moins une nappe textile.

Selon l'invention, ce géotextile composite comprend en outre au moins un élément de renfort, tel qu'une grille ou des fils techniques, s'étendant selon une ou deux direction(s), cette nappe textile étant fabriquée par tissage ou par tricotage, la solidarisation de la nappe textile à l'élément de renfort étant réalisée au moyen de fils de liage passant alternativement d'une face à l'autre dudit géotextile composite. En outre, la nappe textile présente des ouvertures de filtration comprises entre 100 µm et 200 µm et une perméabilité à l'eau normalement au plan comprise entre 15.10⁻³ m/s et 50.10⁻³ m/s de manière à présenter des propriétés de drainage, de filtration, de renforcement et/ou de séparation de sols. Les fils techniques sont espacés selon des intervalles compris entre 4 mm et 50 mm, de préférence entre 8 mm et 25 mm.

En d'autres termes, le géotextile composite objet de la présente invention comporte plusieurs couches, dont une nappe tissée ou tricotée associée à une grille ou à des fils techniques de renfort.

Ainsi que précisé, cet élément de renfort est solidarisé à la nappe textile par des fils de liage passant alternativement d'une face à l'autre du géotextile composite au moyen d'un métier à tricoter de type RACHEL à mailles jetées avec insertion de trame monodirectionnelle ou bidirectionnelle, la nappe textile étant disposée dans le sens de chaîne.

Une telle solidarisation de l'élément de renfort sur la nappe textile confère au géotextile composite une résistance mécanique élevée et précisément déterminée. De plus, l'utilisation d'un métier à tricoter de type RACHEL permet de fabriquer le géotextile composite en une seule opération, ce qui réduit les coûts de fabrication mais aussi de stockage des produits intermédiaires.

Selon une forme de réalisation de l'invention, la nappe textile peut être continue, fermée et homogène.

Une nappe textile continue et fermée, c'est-à-dire non ajourée mais éventuellement poreuse, permet de déterminer avec précision les performances hydrauliques du géotextile remplissant une fonction de filtration et/ou de drainage (calibration des ouvertures).

En outre, le caractère homogène de la nappe textile détermine quant à lui précisément les performances de résistance mécanique du géotextile composite. De plus, une nappe textile d'épaisseur homogène peut être aisément transpercée par les aiguilles du métier RACHEL pour permettre le passage des fils de liage.

Selon une forme de réalisation pratique de l'invention, l'élément de renfort peut être constitué de fils techniques s'étendant de façon rectiligne selon la direction chaîne et/ou selon la direction trame.

Par fils techniques on entend des fils réalisés pour remplir des fonctions précises, telles que la résistance en traction ou en cisaillement. Leur positionnement au sein du géotextile composite permet également de déterminer avec précision la résistance mécanique du géotextile composite, en particulier aux efforts de traction.

De tels intervalles contribuent non seulement à déterminer la résistance mécanique du géotextile composite, mais également à lui conférer une raideur ou une tenue adaptée à son transport et son installation sur site.

De manière pratique, les fils techniques peuvent être constitués d'un matériau choisi dans le groupe comprenant le polyester à haute ténacité, le polypropylène, le verre, l'aramide et le polyvinylalcool.

En pratique encore, la nappe textile peut être constituée d'un matériau choisi dans le groupe comprenant le polypropylène, le polyester, le verre, le polyvinylalcool, les aramides ou pararamides et éventuellement des fibres d'origine naturelle et ce matériau peut présenter une résistance chimique adaptée à l'acidité du sol.

De tels matériaux sont en effet adaptés à différentes natures chimiques de sol, ce qui permet de fabriquer un géotextile composite résistant à la corrosion chimique dans un sol acide ou dans un sol basique.

Selon une forme de réalisation particulière de l'invention, la nappe textile peut présenter une masse surfacique comprise entre 40 g/m² et 400 g/m², de préférence entre 80 g/m² et 200 g/m².

Un géotextile composite possédant une masse surfacique ainsi déterminée présente une tenue ou une raideur facilitant son stockage et son installation sur site, en particulier son adaptation à de faibles rayons de courbure que peuvent exiger certaines strates de terrain. De plus, les valeurs maximales de la masse surfacique déterminent un géotextile composite apte à remplir une fonction de protection de l'élément de renfort, ce qui est nécessaire dans le cadre des applications d'enrochements maritimes ou de revêtements de berges.

Avantageusement, la nappe textile peut présenter une limite de rupture comprise entre 10 kN/m et 200 kN/m

Un géotextile composite comprenant une telle nappe textile est apte à remplir des fonctions de renfort pour lesquelles la résistance mécanique revêt une importance particulière.

Selon un mode de réalisation particulier de l'invention, le géotextile composite peut en outre comporter plusieurs nappes textiles continues, dont au moins une tissée, et/ou tricotée.

Un tel géotextile composite multicouches est apte à remplir de nombreuses fonctions comme la séparation des sols, le drainage hydraulique, de protection, de résistance mécanique etc...

Par ailleurs, un procédé de fabrication d'un géotextile composite destiné à remplir des fonctions de génie civil comportant au moins une nappe textile met en oeuvre un métier à tricoter à mailles jetées avec insertion de trame monodirectionnelle ou bidirectionnelle, ce métier réalisant simultanément les étapes consistant :
- à acheminer cette nappe textile dans le sens chaîne ou sens production ;
- à insérer dans le sens trame et/ou dans le sens chaîne un élément de renfort, tel qu'une grille ou des fils techniques.
- à solidariser ledit élément de renfort à la nappe textile par des fils de liage passant alternativement d'une face à l'autre simultanément aux étapes précédentes.

En pratique, ce métier est du type RACHEL trameur.

Un tel procédé permet de fabriquer un géotextile composite en une seule opération, ce qui réduit son coût de fabrication et les coûts de stockage des coûts intermédiaires composant ce géotextile composite. En effet, la nappe textile tricotée continue est réalisée simultanément à son renforcement.

Une telle solidarisation permet de conférer une forte résistance mécanique au géotextile composite fabriqué.

### BREVE DESCRIPTION DES FIGURES

La manière dont l'invention peut être réalisée et les avantages qui en découlent ressortiront aussi de l'exemple de réalisation qui suit, donné à titre indicatif et non limitatif à l'appui des figures annexées, parmi lesquelles :
La figure 1 est une représentation schématique en vue de dessus d'une nappe textile tissée susceptible d'entrer dans la composition d'un géotextile composite conforme à l'invention.
La figure 2 est une représentation schématique d'un textile tricoté susceptible de rentrer dans la composition d'un géotextile composite conforme à la présente invention.
La figure 3 est une représentation schématique d'un géotextile composite conforme à une première forme de réalisation de l'invention.
La figure 4 est une représentation schématique en vue de dessus d'un géotextile composite conforme à une deuxième forme de réalisation de l'invention, dont la figure 5 présente une vue en section selon la ligne A-A.
La figure 6 est une représentation schématique d'un remblai d'infrastructure routière illustrant une application du géotextile composite objet de la présente invention.
La figure 7 est une représentation schématique d'un autre type de remblai présentant le positionnement du géotextile composite objet de l'invention.
La figure 8 est une représentation schématique d'un géotextile composite conforme à l'invention installé sur une berge pour une application d'enrochement.
La figure 9 est une représentation schématique présentant une autre application du géotextile composite objet de la présente invention, en l'occurrence en tant que support de plateforme horticole.

### MODE DE REALISATION DE L'INVENTION

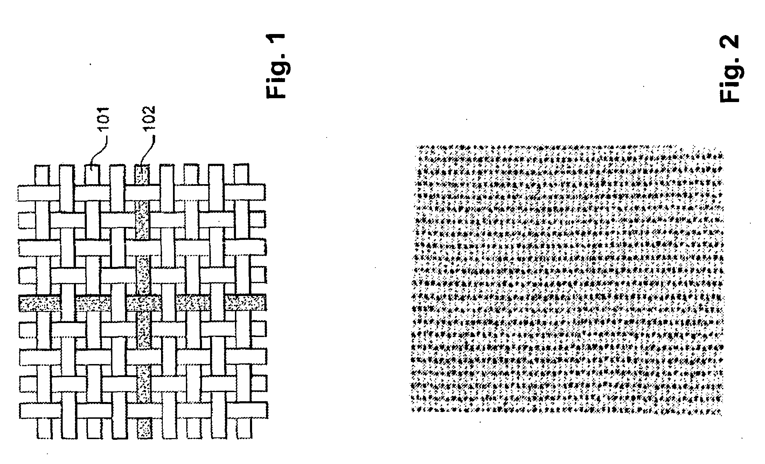

La nappe textile illustrée par la figure 1 est un textile tissé réalisé sur un métier à tisser conventionnel. Des fils de tissage **101** composent l'essentiel de cette nappe textile, laquelle est renforcée par une armure toile ou un « taffetas » présentant une densité relativement élevée de manière à pouvoir remplir des fonctions de filtration et/ou de séparation de sols. En effet, cette nappe textile est apte à composer le géotextile objet de l'invention.

En l'occurrence, cette nappe textile possède une masse surfacique de l'ordre de 100 g/m² à 150 g/m². Une telle masse surfacique détermine les dimensions des porosités de la nappe adaptée aux fonctions à remplir. De plus, cette masse surfacique confère à la nappe textile une aptitude à être transpercée par des aiguilles à tricoter, ce qui permet de fabriquer un géotextile composite conforme à l'invention.

Les fils de base **101** sont ici constitués de bandelettes de polypropylène fibrillées, car ce matériau présente une bonne résistance à la corrosion chimique par l'acidité du sol dans lequel il est destiné à être installé. Des fils **102** sont répartis à intervalles réguliers de manière à renforcer mécaniquement cette nappe textile et, partant, le géotextile composite qui l'incorpore.

La figure 2 illustre une nappe textile tricotée selon la technique dite de « maille jetée ». En l'occurrence, le tricotage est réalisé avec une jauge suffisamment fine pour fabriquer une nappe textile dense de façon à remplir les fonctions de séparation de sols et de filtration utiles dans les applications de génie civil.

La nappe textile illustrée par la figure 2 possède une masse surfacique d'environ 140 g/m², ce qui lui confère une bonne aptitude à être transpercée par les aiguilles pour fabriquer un géotextile composite conforme à la présente invention au moyen du procédé objet de l'invention.

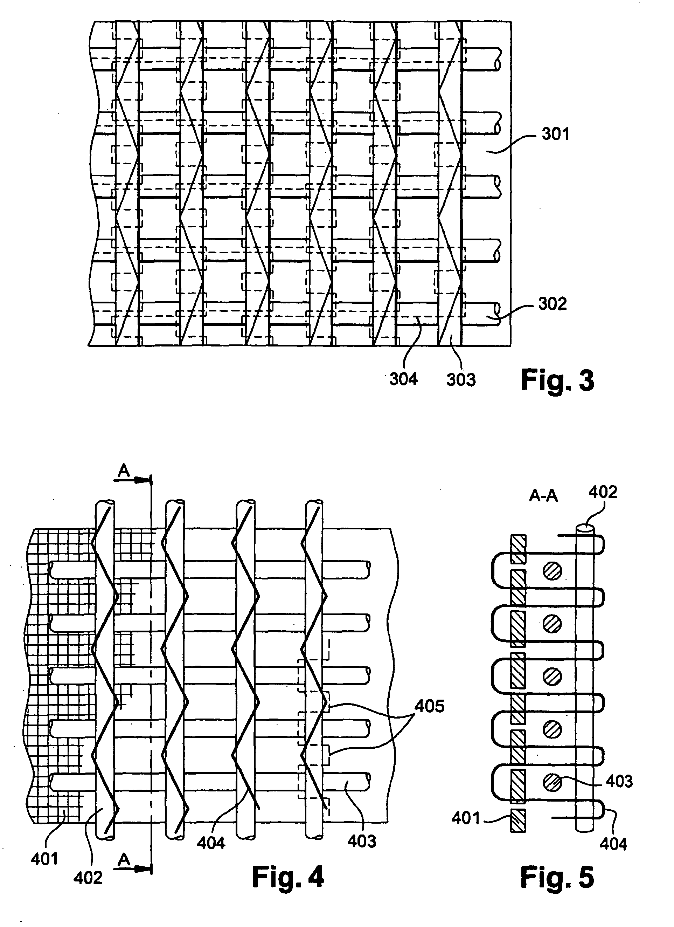

La figure 3 illustre un géotextile composite conforme à l'invention comprenant une nappe textile tricotée **301,** semblable à celle illustré par la figure 2, des fils techniques de renfort **302** et **303** ainsi que des fils de liage **304.** Conformément à l'invention, les fils de renfort **302** et **303** s'étendent de façon rectiligne selon les deux directions principales de la nappe textile **301.**

Par ailleurs, les fils de liage **304** sont tricotés selon le procédé de l'invention pour solidariser les fils techniques de renfort **302** et **303** à la nappe textile **301** en une seule opération. Le tricotage des fils de liage **304** est réalisé au moyen d'un métier de type RACHEL, par exemple commercialisé sous les marques KARL MAYER® ou LIBA® qui fonctionnent selon la technique dite à « maille jetée avec insertion de trame ».

Les figures 4 et 5 illustrent avec plus de détails que la figure 3 la structure d'un géotextile composite conforme à l'invention. Ce géotextile est composé de fils techniques de renfort **402, 403** et d'une nappe textile tissée **401** analogue à celle illustrée par la figure 1. Les fils techniques **402** s'étendent de façon rectiligne dans le sens chaîne, c'est-à-dire dans le sens de production, tandis que les fils techniques **403** sont disposés de façon rectiligne dans le sens trame ou sens travers.

Conformément à l'invention, les fils techniques **402** et **403** constituant un élément de renfort pour le géotextile, sont solidarisés à la nappe textile **401** au moyen de fils de liage **404** par une seule opération de tricotage, conformément au procédé de l'invention. D'autres fils de liage complémentaires **405** liant les fils en trames, donc situés entre les colonnes de chaines ou en combinaison, peuvent être insérés selon la solidité recherchée pour la cohésion du géotextile composite.

Conformément à une caractéristique de l'invention, les fils de liage **404** passent alternativement d'une face à l'autre du géotextile composite, c'est-à-dire qu'ils s'étendent, d'une part, sur la face externe de la nappe textile tissée **401** et, d'autre part, sur la face externe du fil de renfort extérieur **402.** Dans le cas où l'on utilise un métier à tricoter commercialisé sous la marque LIBA®, les fils techniques **402** et **403** constituant l'élément de renfort peuvent également être disposés de part et d'autre de la nappe textile continue **401.**

La fabrication du géotextile composite illustré par la figure 4 consiste à introduire dans un métier de type RACHEL avec insertion de trame la nappe textile **401** dans le sens chaîne qui représente le sens de production. Simultanément à cette première étape, on insère les fils techniques **402** et **403** dans le sens trame et dans le sens chaîne. Toujours dans la même opération, la nappe textile **401** et les fils de renfort **402** et **403** sont solidarisés entre eux au moyen de plusieurs fils de liage **404** tricotés directement par le métier RACHEL. Pour cela, les aiguilles du métier à tricoter transpercent la nappe textile **401** en plusieurs points.

Ce procédé de fabrication réalisé en une seule opération permet donc de réduire le temps, donc le coût, de fabrication et d'installation par rapport aux géotextiles de l'art antérieur, alors même que le géotextile produit par ce procédé est apte à remplir davantage de fonctions de génie civil, en particulier les fonctions de filtration, de drainage, de séparation et de renfort de sols. De plus ce procédé compact de fabrication évite la formation de plis, de glissements et/ou de positionnement défectueux lors de la fabrication, du stockage, du transport et de l'installation du géotextile composite.

Dans l'exemple de la figure, la nappe textile tissée **401** présente des porosités de 150 µm de coté, une perméabilisé à l'eau de 0,01 m/s, ainsi qu'une permittivité hydraulique de 0,1 l/s. De plus, la résistance mécanique à la rupture de cette nappe textile **401** est d'environ 100 kN/m, ce qui contribue à remplir la fonction de renfort dévolue au géotextile composite pour ses applications dans le génie civil.

En outre, selon l'invention, les fils de renfort **402** et **403** sont espacés par des intervalles réguliers de 25 mm, aussi bien dans le sens chaîne que dans le sens trame. Bien évidement, les intervalles entre les fils de renfort **402** peuvent être différents des intervalles entre les fils de renfort **403.** Les fils **402** ont un titre de 1100 dtex à 24000 dtex ou plus. Dans l'exemple de la figure 4, le titre des fils de renfort **403** est identique au titre des fils de renfort **402.**

Les fils **402** et **403** sont également constitués du même matériau, en l'occurrence du polypropylène. Néanmoins, les fils techniques **402** et **403** pourraient également être constitués, en tant que de besoin, de polyester à haute ténacité, de verre, d'aramide et de polyvinylalcool. Comme exposé précédemment, le choix de ce matériau dépend fortement pH du sol dans lequel doit être implanté le géotextile composite.

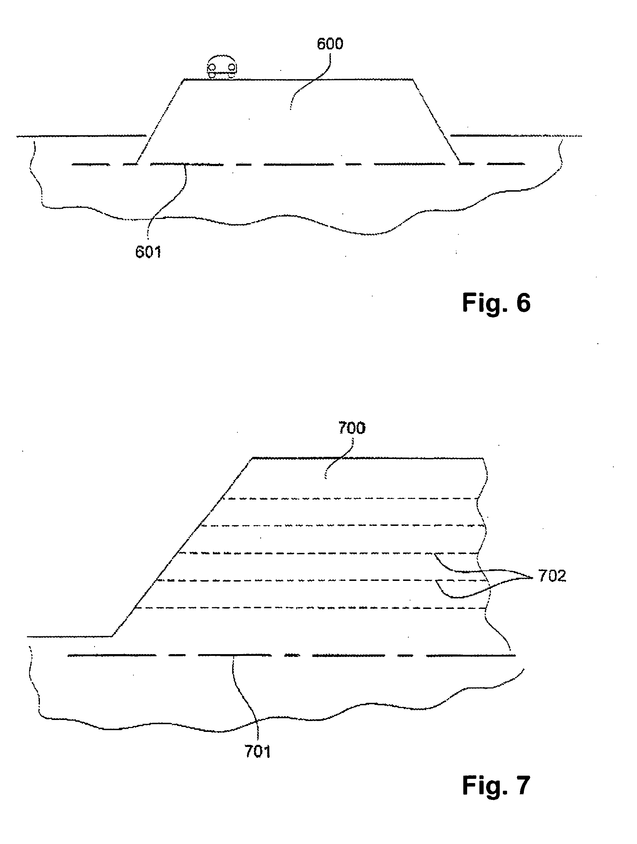

Les figures 6 et 7 illustrent l'utilisation d'un géotextile composite **601** et **701** pour constituer le socle d'un remblai **600, 700** d'une infrastructure routière. En l'occurrence, les remblais **600** et **700** sont bâtis sur des terrains à faible portance, ce qui nécessite l'installation d'un géotextile composite **601, 701** à la base de chacun de ces remblais.

On comprend aisément que les géotextiles composites **601** et **701** doivent remplir des fonctions de séparation des sols, c'est-à-dire de la partie supérieure noble du remblai par rapport à la partie inférieure formant le terrain sous-jacent. Cette fonction de séparation des sols empêche la remontée de fines particules depuis le terrain sous-jacent jusque dans la partie supérieure noble du remblai..De la sorte, le géotextile **601**, **701** rend le remblai plus durable.

Par ailleurs, de manière connue, les géotextiles **601** et **701** présentent une forte résistance mécanique en traction et en cisaillement de manière à supporter convenablement les remblais **600** et **700** et à éviter ainsi leur affaissement. La partie supérieure du remblai peut également être renforcée par d'autres géotextiles **702**.

Le géotextile de l'invention remplit donc une double fonction de séparation et de renforcement :
■ le géotextile permet en effet de reprendre par frottement les efforts de rupture potentiels ;
■ le géotextile, de par la faible ouverture de filtration inhérente à la nappe textile mise en oeuvre, permet d'éviter la circulation des particules constitutives d'un sol fin compressible en direction d'un sol sain choisi comme couche de fondation d'un ouvrage. Il permet également l'utilisation d'un remblai de solde de faible qualité.

Les ouvertures de filtration présentes dans la nappe textile ont typiquement une dimension inférieure ou égale à 200 µm.

Ainsi, le géotextile de l'invention est-il tout particulièrement adapté pour la réalisation de remblais sur sols compressibles, les voies de circulation provisoires, les parkings et aires de stockage, les voies de circulation définitives, les couches de formes, les voies ferrées notamment.

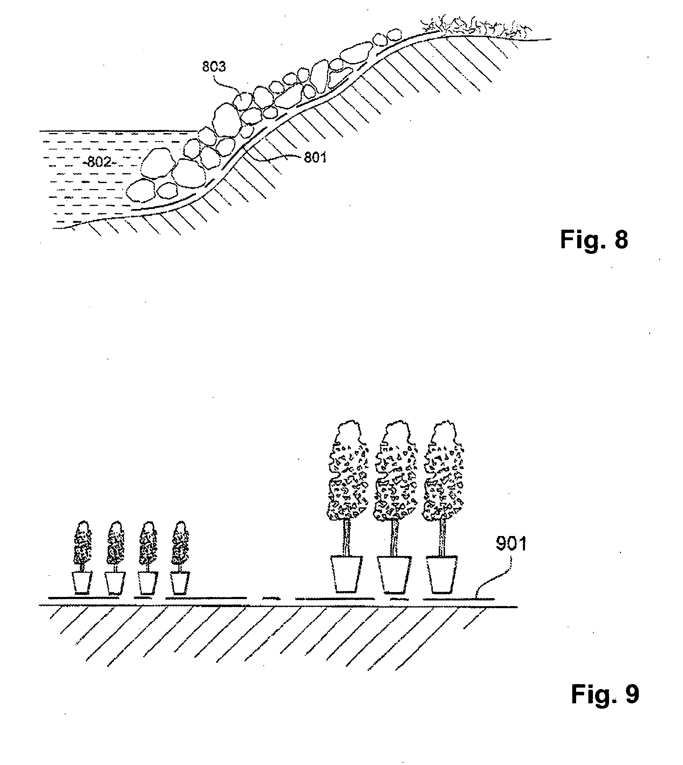

La figure 8 illustre une autre application du géotextile composite **801** de l'invention. Dans ce cas, il s'agit de protéger une berge ou un rivage bordant une étendue d'eau **802**. La berge est ainsi pourvue d'un enrochement **803** posé directement sur le géotextile composite **801** dont le rôle est ici d'empêcher l'érosion du sol par l'eau.

Pour cette application, le géotextile composite **801** remplit encore une fonction de séparation mais cette fois-ci vis-à-vis de l'eau **802**. En outre, il doit supporter les contraintes mécaniques générées par l'enrochement **803**. C'est pourquoi sa structure (nappe textile, élément de renfort, fils de liage) est ici conçue pour présenter une forte résistance mécanique.

Dans cette application, la tenue de la nappe textile, tissée ou tricotée, revêt une importance particulière, car elle permet de conférer au géotextile composite **801** une certaine résistance à l'abrasion et à la déformation locale, ce qui augmente sa durée de vie et donc sa durée de fonctionnement dans cette application de génie civil.

Dans ce contexte, le géotextile de l'invention permet d'assurer la double fonction de drainage et de renforcement. En effet, on peut ainsi réaliser des tranchées drainantes, des talus et autres versants, des terrains de sport, des aires de stockage, ainsi que des remblais sur sols compressibles.

La figure 9 présente une utilisation classique du géotextile composite **901** objet de la présente invention. Dans ce cas, le géotextile sert de support ou de socle à des produits horticoles.

D'autres applications et d'autres formes de réalisations sont envisageables sans pour autant sortir du cadre de cette invention, comme par exemple le renforcement d'un remblai multicouches, un remblai sur sol compressible, un remblai pour ouvrage ferroviaire, un répartiteur de charge en dessous d'un ouvrage de génie civil, un mur antibruit, les culés d'un pont, une piste d'aéroport, ou encore la protection de sols contre le phénomène de fontis.

## Revendications

1. Géotextile composite (601 ; 701 ; 801 ; 901) destiné à remplir des fonctions de génie civil comportant au moins une nappe textile (301 ; 401) et au moins un élément de renfort (302, 303 ; 402, 403), tel qu'une grille ou des fils techniques, s'étendant selon une ou deux direction(s), ladite nappe textile (301 ; 401) étant réalisée par tissage ou par tricotage, la solidarisation de la nappe textile à l'élément de renfort étant réalisée au moyen de fils de liage (404) passant alternativement d'une face à l'autre dudit géotextile composite, la nappe textile (301 ; 401) présente des ouvertures de filtration comprises entre 100 µm et 200 µm **caractérisé en ce que** la nappe textile présente une perméabilité à l'eau normalement au plan comprise entre 15.10⁻³ m/s et 50.10⁻³ m/s de manière à présenter des propriétés de drainage, de filtration, de renforcement et/ou de séparation de sols, et **en ce que** les fils techniques (302, 303 ; 402, 403) sont espacés selon des intervalles compris entre 4 mm et 50 mm, de préférence entre 8 mm et 25 mm.

2. Géotextile composite selon la revendication 1, ***caractérisé* en ce que** la solidarisation de la nappe textile à l'élément de renfort est réalisée au moyen d'un métier à tricoter de type RACHEL à mailles jetées avec insertion de trame monodirectionnelle ou bidirectionnelle, la nappe textile (401) étant disposée dans le sens chaîne.

3. Géotextile composite selon l'une des revendications précédentes, ***caractérisé* en ce que** l'élément de renfort (302, 303 ; 402, 403) est constitué de fils techniques s'étendant de façon rectiligne selon la direction chaîne (302 ; 402) et/ou selon la direction trame (303 ; 403).

4. Géotextile composite selon la revendication 3, ***caractérisé* en ce que** les fils techniques (302, 303 ; 402, 403) sont constitués d'un matériau choisi dans le groupe comprenant le polyester à haute ténacité, le polypropylène, le verre, l'aramide et le polyvinylalcool.

5. Géotextile composite selon l'une des revendications précédentes, ***caractérisé* en ce que** la nappe textile (301 ; 401) est constituée d'un matériau choisi dans le groupe comprenant le polypropylène, le polyester, le verre, le polyvinylalcool, les aramides ou pararamides et les fibres d'origine naturelle, et **en ce que** ledit matériau présente une résistance chimique adaptée à l'acidité du sol.

6. Géotextile composite selon l'une des revendications précédentes, ***caractérisé* en ce que** la nappe textile (301 ; 401) présente une masse surfacique comprise entre 40 g/m² et 400 g/m², de préférence entre 80 g/m² et 200 g/m².

7. Géotextile composite selon l'une des revendications précédentes, ***caractérisé* en ce que** la nappe textile (301 ; 401) présente une limite de rupture comprise entre 10 kN/m et 200 kN/m .

8. Géotextile composite selon l'une des revendications précédentes, ***caractérisé* en ce qu'**il comporte en outre plusieurs nappes textiles continues, dont au moins une nappe tissée ou tricotée.

## Claims

1. Composite geotextile (601; 701; 801; 901) for civil engineering applications, comprising at least one textile ply (301; 401) and at least one reinforcing element (302, 303; 402, 403), such as a grid or technical yarns, extending into one or two directions, said textile ply (301; 401) being produced by weaving or knitting, the textile ply being joined to the reinforcing element by binding yarns (404) passing alternately from one face of the composite geotextile to the other, the textile ply (301; 401) having filtration openings of between 100 µm and 200 µm, ***characterized* in that** the textile ply has a normal-to-plane water permeability of between 15.10⁻³ m/s and 50.10⁻³ m/s in order to have soil drainage, filtration, reinforcement and/or separation properties, and **in that** the technical yarns (302, 303; 402, 403) are spaced at intervals of between 4 mm and 50 mm, preferably between 8 mm and 25 mm.

2. Composite geotextile according to Claim 1, ***characterized* in that** the textile ply is joined to the reinforcing element by means of a Raschel loom warp knitting machine with unidirectional or bidirectional weft insertion, the textile ply (401) being disposed in the warp direction.

3. Composite geotextile according to one of the preceding claims, ***characterized* in that** the reinforcing element (302, 303; 402, 403) consists of technical yarns extending straight in the warp direction (302; 402) and/or in the weft direction (303; 403).

4. Composite geotextile according to Claim 3, ***characterized* in that** the technical yarns (302, 303; 402, 403) consist of a material selected from the group comprising high tenacity polyester, polypropylene, glass, aramid fibre and polyvinyl alcohol.

5. Composite geotextile according to one of the preceding claims, ***characterized* in that** the textile ply (301; 401) consists of a material selected from the group comprising polypropylene, polyester, glass, polyvinyl alcohol, aramid or pararamid fibres and natural fibres, and **in that** the said material has a chemical resistance adapted to the acidity of the soil.

6. Composite geotextile according to one of the preceding claims, ***characterized* in that** the textile ply (301; 401) has a mass per unit area of between 40 g/m² and 400 g/m², preferably between 80 g/m² and 200 g/m².

7. Composite geotextile according to one of the preceding claims, ***characterized* in that** the textile ply (301; 401) has a breaking stress of between 10 kN/m and 200 kN/m.

8. Composite geotextile according to one of the preceding claims, ***characterized* in that** it further comprises a plurality of continuous textile plies, including at least one woven or knitted ply.

## Patentansprüche

1. Verbund-Geotextil (601; 701; 801; 901), das dazu bestimmt ist, bautechnische Funktionen zu erfüllen, und mindestens eine textile Matte (301; 401) und mindestens ein Verstärkungselement (302, 303; 402, 403) wie etwa ein Gitter oder technische Fasern umfasst, die sich in einer oder zwei Richtung/en erstrecken, wobei die textile Matte (301; 401) durch Weben oder Wirken gefertigt wird, wobei die feste Verbindung der textilen Matte mit dem Verstärkungselement mittels Bindefäden (404) hergestellt wird, die abwechselnd von einer Seite des Verbund-Geotextils zur anderen verlaufen, wobei die textile Matte (301; 401) 100 µm bis 200 µm große Filteröffnungen aufweist, **dadurch gekennzeichnet, dass** die textile Matte eine Wasserdurchlässigkeit senkrecht zur Ebene von 15.10⁻³ m/s bis 50.10⁻³ m/s aufweist, um Drainage-, Filtrierungs-, Verstärkungs- und/oder Bödentrennungseigenschaften zu bieten, und dass die technischen Fasern (302, 303; 402, 403) in Abständen von 4 bis 50 mm, vorzugsweise 8 bis 25 mm verteilt sind.

2. Verbund-Geotextil nach Anspruch 1, **dadurch gekennzeichnet, dass** die feste Verbindung der textilen Matte mit dem Verstärkungselement mittels einer Kettstuhlwirkmaschine des Typs RACHEL mit mono- oder bidirektionalem Schusseintrag hergestellt wird, wobei die textile Matte (401) in der Kettrichtung angeordnet wird.

3. Verbund-Geotextil nach einem der vorhergehenden Ansprüche, **dadurch gekennzeichnet, dass** das Verstärkungselement (302, 303; 402, 403) aus technischen Fasern gebildet ist, die in der Kettrichtung (302; 402) und/oder Schussrichtung (303; 403) geradlinig verlaufen.

4. Verbund-Geotextil nach Anspruch 3, **dadurch gekennzeichnet, dass** die technischen Fasern (302, 303; 402, 403) aus einem Material bestehen, das aus der Gruppe ausgewählt ist, die hochzugfestes Polyester, Polypropylen, Glas, Aramid und Polyvinylalkohol umfasst.

5. Verbund-Geotextil nach einem der vorhergehenden Ansprüche, **dadurch gekennzeichnet, dass** die textile Matte (301; 401) aus einem Material besteht, das aus der Gruppe ausgewählt ist, die Polypropylen, Polyester, Glas, Polyvinylalkohol, Aramide oder Para-Aramide und Fasern natürlichen Ursprungs umfasst, und dass das Material eine chemische Beständigkeit aufweist, die dem Säuregehalt des Bodens angepasst ist.

6. Verbund-Geotextil nach einem der vorhergehenden Ansprüche, **dadurch gekennzeichnet, dass** die textile Matte (301; 401) eine flächenbezogene Masse von 40 g/m² bis 400 g/m², vorzugsweise 80 g/m² bis 200 g/m² hat.

7. Verbund-Geotextil nach einem der vorhergehenden Ansprüche, **dadurch gekennzeichnet, dass** die textile Matte (301; 401) eine Reißfestigkeit von 10 kN/m bis 200 kN/m hat.

8. Verbund-Geotextil nach einem der vorhergehenden Ansprüche, **dadurch gekennzeichnet, dass** es außerdem mehrere durchgehende textile Matten, darunter mindestens eine gewebte oder gewirkte umfasst.
